Europäisches Patentamt

European Patent Office

Office européen des brevets

(11) Veröffentlichungsnummer : **0 158 116**
**B1**

(12) **EUROPÄISCHE PATENTSCHRIFT**

(45) Veröffentlichungstag der Patentschrift :
15.06.88

(51) Int. Cl.⁴ : **H 01 Q 1/42, B 32 B 27/12,**
**B 29 C 51/12**

(21) Anmeldenummer : 85102504.9

(22) Anmeldetag : 06.03.85

(54) Verfahren zur Herstellung von Radomen.

(30) Priorität : 22.03.84 DE 3410503

(43) Veröffentlichungstag der Anmeldung :
16.10.85 Patentblatt 85/42

(45) Bekanntmachung des Hinweises auf die Patenterteilung : 15.06.88 Patentblatt 88/24

(84) Benannte Vertragsstaaten :
DE FR GB IT

(56) Entgegenhaltungen :
EP-A- 0 110 332
CH-A- 300 993
DE-A- 2 927 653
DE-A- 3 236 447
US-A- 4 194 938
PATENT ABSTRACTS OF JAPAN, Band 5, Nr. 176, 12. November 1981, Seite (E-81) (848); & JP-A-56-102103
IEE PROCEEDINGS-F, Band 128, Nr. 7, Dezember 1981, Old Woking, Surrey, GB; D.A. Conti et al. "Special problems associated with aircraft radomes", Seiten 412-418

(73) Patentinhaber : DORNIER SYSTEM GmbH
Postfach 1360
D-7990 Friedrichshafen (DE)

(72) Erfinder : Steinheil, Eckart, Dr.
Georg-Friedrich-Händel-Strasse 10
D-7778 Markdorf (DE)
Erfinder : Schröder, Hans-Wolfgang, Dr.
Kupferbergstrasse 27
D-7759 Immenstaad-Kippenhausen (DE)
Erfinder : Ludwig, Wolfgang, Dr.
Elblingweg 15
D-7758 Meersburg (DE)
Erfinder : Jäger, Franz
Kirchstrasse 7
D-7758 Stetten (DE)

(74) Vertreter : Landsmann, Ralf, Dipl.-Ing.
Kleeweg 3
D-7990 Friedrichshafen 1 (DE)

**Beschreibung**

Die Erfindung betrifft ein Verfahren zur Herstellung von Antennenabdeckungen oder Radomen, wobei Formgewebe aus Faserwerkstoff und ein thermoplastischer Kunststoff mit extrem hoher Schmelzviskosität durch Anwendung von Druck und Wärme zu einem Verbundwerkstoff vereinigt werden.

Radome dienen zum Schutz von Antennen an Flugzeugen gegen Umwelteinflüsse. Die Radome müssen eine hohe Transparenz und geringe Verluste für Radarwellen im gesamten Betriebsfrequenzbereich besitzen. Sie müssen ausserdem die lagebedingten aerodynamischen Kräfte aufnehmen können und eine hinreichend hohe Regen-Erosionsbeständigkeit sowie eine hinreichend hohe Beständigkeit gegenüber den durch die aerodynamische Erwärmung auftretenden Temperaturen aufweisen.

Radome dieser Art werden im allgemeinen aus faserverstärkten Duroplasten hergestellt, z. B. aus E-Glasfaser verstärktem Epoxidharz. Mit duroplastischen Werkstoffen sind jedoch nicht alle Anforderungen erfüllbar. Störend sind insbesondere die zu hohen Dielektrizitätskonstanten und die zu hohen dielektrischen Verluste der duroplastischen Werkstoffe, sowie die Notwendigkeit einer Regen-Erosionsschutzschicht, durch die zusätzliche Verluste eingebracht werden. Diese Begrenzungen machen sich besonders bei radaroptisch dünnen (d. h. breitbandigen) Radomen und bei Betriebsfrequenzen von mehr als 10 GHz bemerkbar.

Wesentlich günstigere dielektrische Eigenschaften haben einige thermoplastische Werkstoffe wie z. B. Polyethylen, insbesondere wie ultrahochmolekulares Polyethylen (UHMPE). So sind z. B. die dielektrischen Verluste von UHMPE um etwa zwei Grössenordnungen geringer als die von Epoxidharzen. Die Regen-Erosionsbeständigkeit von UHMPE ist zudem so hoch, dass auf besondere Erosionsschutzschichten verzichtet werden kann.

Der Verwendung dieser Thermoplaste mit hoher Schmelzviskosität steht aber die schwierige Verarbeitbarkeit entgegen. Die Schmelze dringt nur sehr schwer in den Gewebeverbund ein.

Es wurde bereits vorgeschlagen (DE-A1-32 36 447), zur Herstellung solcher Verbundwerkstoffe das Matrixmaterial in einem ersten Schritt drucklos an ein ebenes Fasergewebe anzusintern und in einem zweiten Schritt mehrere vorbereitete Fasergewebe aneinander zu pressen. Es zeigte sich jedoch bei Versuchen, dass mit diesem Verfahren bei kompliziert geformten Teilen befriedigende Ergebnisse einen oft grossen Aufwand erfordern.

Aufgabe der Erfindung ist es, ein Verfahren anzugeben, mit dem hochfeste, regen-erosionsbeständige und radartransparente Radome aus endlosfaserverstärkten Thermoplasten, insbesondere hoher Schmelzviskosität hergestellt werden können.

Diese Aufgabe wird erfindungsgemäss gelöst von Verfahren mit den in den Ansprüchen angegebenen Verfahrensschritten.

Erfindungsgemäss werden stets Fasergewebe und Matrixfolien aufeinandergeschichtet und unter erhöhter Temperatur verpresst, was zu einem innigen Durchdringen der Gewebe mit Matrixmaterial und einer gleichmässigen Verteilung der Komponenten führt. Es entsteht ein hochfestes, regenerosionsbeständiges Verbundmaterial mit ausreichender Durchlässigkeit für Radarwellen in einem weiten Frequenzbereich (auch > 16 GHz).

Als Matrixmaterial können im Prinzip alle Thermoplaste verwendet werden. Besonders geeignet ist das Verfahren für Thermoplaste mit hoher Schmelzviskosität. So lässt sich mit dem Verfahren selbst UHMPE verarbeiten, ein Material, dessen Schmelzviskosität so hoch ist, dass kein Schmelzindex mehr bestimmbar ist.

Auch in der Wahl der Fasern bestehen keine Beschränkungen. Es sind alle in der Kunststofftechnik gebräuchlichen Fasermaterialien verwendbar, wie z. B. Glasfasern, Kohlefasern oder Aramidfasern.

Zum Erreichen einer gleichmässigen Faser/Matrixverteilung können Fasergewebe verwendet werden, die in Form des Bauteils gewebt oder gestrickt sind. Diese Lösung ist bei hohen Stückzahlen und hohen Festigkeitsanforderungen vorteilhaft. Bei kleineren Stückzahlen ist es günstiger, Fasergewebe zu verwenden, die entsprechend zugeschnitten sind.

Auch die Kunststoffolien können entweder in Form von Zuschnitten oder, gleich der Form entsprechend, als tiefgezogene Teile verwendet werden.

Die zur Lastaufnahme benötigten Glasgewebe können vorteilhaft an der Innenseite des Bauteils konzentriert werden. An der Aussenseite befinden sich dann Schichten, die nicht faserverstärkt sind. Diese ungleichmässige Verteilung garantiert neben hoher Festigkeit eine sehr gute Regen-Erosionsbeständigkeit. Als ausreichend für den Regen-Erosionsschutz hat sich eine 0,3 bis 1,0 mm dicke UHMPE-Schicht erwiesen.

In einer vorteilhaften Ausführung kann die äusserste Schicht eine andere Farbe als die darunterliegenden Schichten haben. Dadurch kann leicht erkannt werden, ob die Erosion unzulässig weit fortgeschritten ist, bevor die Gefahr eines Bauteilversagens infolge Schädigung des tragenden Glasgewebes besteht.

Der Preßdruck kann durch konventionelle Maßnahmen, z. B. mittels eines hydraulischen oder pneumatischen Drucksackes aufgebracht werden. Vorteilhafterweise kann er auch in einer geschlossenen Form durch thermische Expansion von Druckstücken aus einem entsprechenden Material aufgebracht werden. Eine dichtgeschlossene Form wird dazu mit den Komponenten und mit einem Druckstück gefüllt und erwärmt. Durch die thermische Expansion des Druckstückes entsteht ein sehr hoher Druck, der Gewebe und Matrix zu einem einzigen Bauteil vereinigt. Als bevorzugtes Material für die Drückstücke hat sich Silikongummi erwiesen.

In der Abkühlphase sollte vorteilhafterweise dafür gesorgt werden, dass der Druck aufrecht erhalten bleibt, so dass ein Zusammenfallen des noch schmelzflüssigen Werkstückes vermieden wird. Der Abbau des thermoexpansiven Druckes beim Abkühlen kann durch Aufbringen eines zusätzlichen Druckes durch Gas oder durch einen Stempel ausgeglichen werden. Analoge Maßnahmen können beim Aufheizen ergriffen werden.

Vorteilhafterweise kann aus den Kunststofffolien und den Fasergeweben zunächst ein Vorformling hergestellt werden. Dies kann z. B. durch Punktverschweißung der Kunststofffolien miteinander und mit dem Fasergewebe geschehen. Der Vorformling kann innerhalb der Preßform oder vorteilhafterweise in separaten Formen aufgebaut werden. Er wird dann sofort oder später in der Preßform zum fertigen Teil verpresst.

Die Druckformen sind in der Regel so gestaltet, dass sie der Aussenkontur des fertigen Bauteils entsprechen. Ebenso ist es jedoch möglich, auf eine Innenform zu pressen.

## Patentansprüche

1. Verfahren zur Herstellung von Antennenabdeckungen oder Radomen, wobei Formgewebe aus Faserwerkstoff und ein thermoplastischer Kunststoff mit extrem hoher Schmelzviskosität durch Anwendung von Druck und Wärme zu einem Verbundwerkstoff vereinigt werden, dadurch gekennzeichnet, daß

a) der thermoplastische Kunststoff in Folienform verwendet wird,

b) die aufeinander geschichteten Kunststofffolien und Formgewebe bei Drücken zwischen 10 und 200 bar und bei Temperaturen oberhalb des Kristallitschmelzbereichs des thermoplastischen Kunststoffs zusammengepresst werden.

2. Verfahren nach Anspruch 1, dadurch gekennzeichnet, daß der hohe Druck auch in der Abkühlphase erhalten bleibt.

3. Verfahren nach Anspruch 1 oder 2, dadurch gekennzeichnet, daß die Kunststofffolien in Form von Zuschnitten oder von tiefgezogenen Teilen verwendet werden.

4. Verfahren nach einem der vorhergehenden Ansprüche, dadurch gekennzeichnet, daß die Formgewebe auf der Innenseite des Bauteils konzentriert werden und als äußerste Schicht eine unverstärkte Thermoplastfolie verwendet wird.

5. Verfahren nach einem der vorhergehenden Ansprüche, dadurch gekennzeichnet, daß als äußerste Schicht eine unverstärkte thermoplastische Folie aus einem Material verwendet wird, das eine hohe Regen-Erosionsbeständigkeit aufweist.

6. Verfahren nach Anspruch 5, dadurch gekennzeichnet, daß als äußerste Schicht eine 0,3 bis 1,0 mm dicke unverstärkte UHMPE-Schicht erzeugt wird.

7. Verfahren nach Anspruch 5, dadurch gekennzeichnet, daß als äußerste Schicht eine 0,3 bis 1,0 mm dicke unverstärkte Polyether-Etherketonschicht erzeugt wird.

8. Verfahren nach einem der Ansprüche 4, 5, 6 oder 7, dadurch gekennzeichnet, daß für die äußerste Schicht eine Folie in einer anderen Farbe verwendet wird.

9. Verfahren nach Anspruch 5, dadurch gekennzeichnet, daß als äußerste Schicht UHMPE und als innere Schicht Polyethylen, Polybuten oder ein Polypropylen mit geringerer Schmelzviskosität verwendet wird.

10. Verfahren nach einem der vorhergehenden Ansprüche, dadurch gekennzeichnet, daß der Preßdruck durch thermische Expansion von Druckstücken aus Silikongummi in einer geschlossenen Form aufgebracht wird.

11. Verfahren nach Anspruch 10, dadurch gekennzeichnet, daß eine evakuierte Preßform verwendet wird.

12. Verfahren nach einem der vorhergehenden Ansprüche, dadurch gekennzeichnet, daß während des Teils der Aufheiz- und/oder Abkühlphase, in der kein thermoexpansiver Druck vorliegt, mittels eines Gases oder eines Stempels ein zusätzlicher Druck in der Preßform aufgebracht wird.

13. Verfahren nach einem der vorhergehenden Ansprüche, dadurch gekennzeichnet, daß erst aus den Kunststofffolien und den Fasergeweben ein Vorformling hergestellt wird, der dann in einer Preßform zum fertigen Teil verpresst wird.

14. Verfahren nach einem der vorhergehenden Ansprüche, dadurch gekennzeichnet, daß eine Druckform verwendet wird, die der Außenkontur des fertigen Bauteils entspricht.

15. Verfahren nach einem der Ansprüche 1 bis 13, dadurch gekennzeichnet, daß eine Druckform verwendet wird, die der Innenkontur des fertigen Bauteils entspricht.

## Claims

1. Method of manufacturing antennae coverings or radomes, whereby shaped fabric made of a fibre material and a thermoplastic with an extremely high melting viscosity are joined to form a composite material by means of pressure and heat, characterised in that

a) the thermoplastic is used in the form of foil,

b) the pieces of plastic foil placed on top of each other in layers are pressed together at pressures of between 10 and 200 bars and at temperatures above the crystallite melting range of the thermoplastic.

2. Method according to claim 1, characterised in that the high pressure is also maintained in the cooling phase.

3. Method according to claims 1 or 2, characterised in that the pieces of plastic foil are used in the form of blanks or deep drawn parts.

4. Method according to one of the preceding claims, characterised in that the shaped fabric is concentrated on the inside of the component and that a non-reinforced thermoplastic foil is used as the outermost layer.

5. Method according to one of the preceding claims, characterised in that a non-reinforced thermoplastic foil is used as the outermost layer, which is made of a material with a high resistance to rain erosion.

6. Method according to claim 5, characterised in that a 0.3 - 1.0 mm thick non-reinforced UHM PE layer is produced as an outermost layer.

7. Method according to claim 5, characterised in that a 0.3 - 1.0 mm thick layer of non-reinforced polyetherether keytone layer is produced as an outermost layer.

8. Method according to one of claims 4, 5, 6 or 7, characterised in that a foil of another colour is used for the outermost layer.

9. Method according to claim 5, characterised in that UHM PE is used as an outermost layer and polyethylene, polybutene or a polypropylene with a lower melting viscosity are used as an inner layer.

10. Method according to one of the preceding claims, characterised in that the moulding pressure is applied by thermal expansion of pressure pieces made of silicon rubber in a closed mould.

11. Method according to claim 10, characterised in that an evacuated mould is used.

12. Method according to one of the preceding claims, characterised in that during the part of the heating up and or cooling phase, during which no thermo-expansive pressure is present, an additional pressure is applied in the mould by means of a gas or a punch.

13. Method according to one of the preceding claims, characterised in that a preform is made first from the pieces of plastic foil and the fibre tissues, which is then pressed into the finished part in a compression mould.

14. Method according to one of the preceding claims, characterised in that a pressure mould is used, which corresponds to the external contour of the finished component.

15. Method according to claims 1 to 13, characterised in that a pressure mould is used, which corresponds to the internal contour of the finished component.


**Revendications**

1. Procédé pour fabriquer des enveloppes de protection d'antennes ou radômes, dans lequel un tissu moulable réalisé à partir d'un matériau renforcé par des fibres et une matière thermoplastique d'une viscosité de fusion extrêmement élevée sont réunis par application d'une pression et de la chaleur, caractérisé en ce que

a) la matière thermoplastique est utilisée sous forme de feuilles,

b) les feuilles de matière plastique et tissus moulables empilés sont comprimés à des pressions comprises entre 10 et 200 bars et à des températures au-dessus de la zone de fusion de cristallite de la matière thermoplastique.

2. Procédé selon la revendication 1, caractérisé en ce que la haute pression est également maintenue pendant la phase de refroidissement.

3. Procédé selon l'une des revendications 1 ou 2, caractérisé en ce que les feuilles de matière plastique sont mises en œuvre sous la forme de découpes ou de pièces embouties.

4. Procédé selon l'une quelconque des revendications 1 à 3, caractérisé en ce que les tissus moulables sont concentrés sur la face intérieure de l'élément et qu'une feuille de matière thermoplastique non renforcée est utilisée comme couche extérieure.

5. Procédé selon l'une quelconque des revendications 1 à 4, caractérisé en ce que la couche extérieure est réalisée à partir d'une feuille de matière thermoplastique non renforcée qui présente une grande résistance à l'érosion par la pluie.

6. Procédé selon la revendication 5, caractérisé en ce que la couche extérieure est une couche d'UHMPE non renforcé de 0,3 à 1,0 mm d'épaisseur.

7. Procédé selon la revendication 5, caractérisé en ce que la couche extérieure est une couche de polyétheréthercétone non renforcé de 0,3 à 1,0 mm d'épaisseur.

8. Procédé selon l'une quelconque des revendications 4, 5, 6 ou 7, caractérisé en ce que la couche extérieure est réalisée avec une feuille d'une autre couleur.

9. Procédé selon la revendication 5, caractérisé en ce que la couche extérieure est réalisée en UHMPE et la couche intérieure, en polyéthylène, polybutylène ou en un polypropylène d'assez faible viscosité de fusion.

10. Procédé selon l'une quelconque des revendications 1 à 9, caractérisé en ce que la pression est fournie par expansion thermique d'organes de pression en caoutchouc silicone dans un moule fermé.

11. Procédé selon la revendication 10, caractérisé en ce qu'il met en œuvre une matrice mise sous vide.

12. Procédé selon l'une quelconque des revendications 1 à 11, caractérisé en ce que pendant la partie de la phase de chauffage et/ou de refroidissement sans pression par expansion thermique, une pression supplémentaire est fournie à l'intérieur de la matrice au moyen d'un gaz ou d'un poinçon.

13. Procédé selon l'une quelconque des revendications 1 à 12, caractérisé en ce qu'il comprend tout d'abord la réalisation d'une ébauche à partir des feuilles de matière plastique et des tissus en fibres laquelle est ensuite comprimée en pièce terminée dans une matrice.

14. Procédé selon l'une quelconque des revendications 1 à 13, caractérisé en ce qu'il utilise un moule correspondant aux contours extérieurs de la pièce terminée.

15. Procédé selon l'une quelconque des revendications 1 à 13, caractérisé en ce qu'il utilise un moule correspondant aux contours intérieurs de la pièce terminée.